# NEUE EUROPÄISCHE PATENTSCHRIFT

(11) **EP 0 139 667 B2**
(45) Veröffentlichungstag und Bekanntmachung des Hinweises auf die Entscheidung über den Einspruch: **15.05.1996**
(45) Hinweis auf die Patenterteilung: 18.01.1989
(21) Anmeldenummer: 84900966.7
(22) Anmeldetag: 15.03.1984
(51) Int. Cl.: C08L 63/00, C08K 5/17, D06M 15/55, C08J 5/06

(54) **VERFAHREN ZUR PRÄADHÄRISIERUNG VON POLYESTER-FÄDEN**
METHOD FOR PREADHERING POLYESTER YARNS
PROCEDE DE PREADHERENCE DE FILS DE POLYESTER

(30) Priorität: 24.03.1983 CH 1614/83
(43) Veröffentlichungstag der Anmeldung: 08.05.1985
(73) Patentinhaber: RHONE-POULENC VISCOSUISSE SA, CH-6021 Emmenbrücke (CH)
(72) Erfinder: HUMBRECHT, Rémy, CH-6015 Reussbühl (CH); BEUTLER, Peter, CH-6045 Meggen (CH); MÜLLER, Armin, CH-6020 Emmenbrücke (CH)
(74) Vertreter: Herrmann, Peter Johannes
(86) Internationale Anmeldenummer: CH8400042
(87) Internationale Veröffentlichungsnummer: WO8403707

(56) Entgegenhaltungen:
- DE-A- 1 444 141
- DE-A- 1 794 304
- DE-A- 2 925 006
- DE-A- 3 026 451
- US-A- 2 902 398
- US-A- 3 297 468
- US-A- 3 793 425
- US-A- 3 962 011
- US-A- 4 121 901
- Buch "Epoxy Resins Chemistry and Technology" from C.A. May and Y. Tanaka, Marcel Dekker Inc. New York (US) 1983, p. 287

## Beschreibung

Die Erfindung betrifft ein Verfahren zur Herstellung eines Polyesterfadens für Reifenkord mittels eines integrierten Spinnstreckprozesses mit einer Abzugsgeschwindigkeit zwischen 2000 und 6000 m/min, wobei in einer ersten Stufe vor dem Verstrecken eine Spinnpräparation aufgetragen wird und in einer zweiten Stufe die Präadhärisierung des Polyesterfadens zur Verbesserung der Hafteigenschaften mit Gummi vorgenommen wird.

Um die Hafteigenschaften von synthetischen Fäden mit Gummi zu verbessern, behandelt man diese nach klassischer Art mit einer Zusammensetzung, die eine Mischung aus Latex und Resorcinol-Formaldehyd-Harz (Bad RFL) darstellt. Diese Zusammensetzung lässt man dann auf den Fäden durch eine thermische Behandlung aushärten.

Die heute oft verwendeten Fäden zur Verstärkung von Reifen, Schläuchen, Keilriemen und Förderbändern sind Polyesterfäden. Der Nachteil der Verwendung von Polyesterfäden ist, dass sie ungenügend reaktive Endgruppen besitzen, mit der Folge, dass die Haftung Faden/RFL schlecht ist. Es ist deswegen notwendig, den Polyesterfaden einer Vorbehandlung zu unterziehen. Diese Vorbehandlung, auch Präadhärisierung genannt, wird sehr oft beim Faserhersteller selbst durchgeführt, so dass der Verbraucher die Adhärisierung mit RFL vor der Vulkanisation des Fadens mit Gummi durchführen kann.

Verfahren zur Präadhärisierung des Polyesterfadens sind bekannt (US-A-4 121 901). Das bekannte Verfahren zur Behandlung von Polyesterfäden mit einem Adhärisierungsmittel besteht darin, dass das Adhärisierungsmittel den Polyesterfaden mit einer Harzschicht umhüllt, auf welche später der Reifenhersteller eine RFL-Schicht aufbringen kann. Das Adhärisierungsmittel, welches ein Polyepoxid und auch ein tertiäres Amin als basisch wirksames Neutralisationsmittel enthalten kann, wird gleichzeitig mit einer wässrigen Spinnpräparation vor dem Verstrecken auf den Faden aufgebracht.

Die US-A-3 383 242 und 3 297 468 betreffen Verfahren zur Vorbehandlung von Polyethylenterephthalat-Fäden, indem auf den genannten Faden (A) eine Dispersion einer härtbaren Kombination von einem Diepoxid und einem Diamin mit primären oder sekundären Funktionen (Härtungsmittel) und (B) einer in Wasser dispergierbaren Fadenpräparation aufgetragen wird. Dieser Auftrag erfolgt auf einen unverstreckten Faden, der aufgespult und in einem zweiten Arbeitsgang verstreckt wird. Der Nachteil dieses Verfahrens ist, dass eine Zusammensetzung einsetzen muss, die bei Raumtemperatur nach einigen Stunden zu einer gelartigen Masse erstarrt. Die Haltbarkeit der Lösung ist schlecht. Anderseits kann der Faden nicht mit beheizten Rollen, sondern nur in Öfen, d.h. auch bei langsamen Abzugsgeschwindigkeiten, verstreckt werden. Auf den Rollen wüide überschüssige Präadhärisierungslösung aushärten und sich in kurzer Zeit eine Kruste aufbauen. Die nach diesem Verfahren behandelten Fäden zeigen zudem verschlechterte mechanische Eigenschaften.

Gemäss US-Patent 3 962 011 werden Polyamid- Cord-, d.h. bereits gezwirnte Fäden, mit einer Kombination von einem Polyepoxid und tertiärem Amin in einem Zweibadverfahren imprägniert und thermisch ausgehärtet. Die Übertragung des bekannten Verfahrens auf Polyester ist wegen des Mangels an reaktiven Endgruppen nicht möglich. Eine Präadhärisierung ist für Polyamide nicht erforderlich.

US-A-3 793 425 und DE-A-2 056 707 betreffen integrierte Spinnstreck-Verfahren, um Polyesterfäden herzustellen, indem man auf dem frisch gesponnenen und ebenfalls noch unverstreckten Polyesterfaden eine Zusammensetzung, enthaltend ein alkalisch gepuffertes Polyepoxid-Harz, aufträgt und danach den so behandelten Faden heissverstreckt und aufspult.

Eine Aufgabe der vorliegenden Erfindung ist es, ein Verfahren zu schaffen, wodurch die Verschmutzung der Streckaggregate einhergehend mit der Verkrustung der Streckrollen, zu verhindern und gleichzeitig gute mechanische Laufeigenschaften der Fäden zu gewährleisten.

Die vorgenannte Aufgabe wird erfindungsgemäss dadurch gelöst, dass auf den Polyesterfaden nach der Verstreckung zwischen dem letzten Duo und vor dem Aufspulen eine Zusammensetzung aus 0,05 bis 0,5 Gew.-% eines Polyepoxids und 2 bis 114 ppm eines tertiären Amins folgender allgemeinen Formel 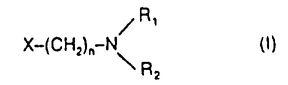 worin 1 ≤ n ≤ 6, R₁ und R₂ identisch oder verschieden, ein Alkyl mit C₁₋₆, Hydroxyalkyl mit C₁₋₆, Alkylaryl oder Aryl und X H, OH, NH₂, NHR₃, NR₄R₅ oder R₆, wobei R₃, R₄, R₅ und R₆ je Alkyl- mit C₁₋₆ oder Arylgruppen bedeuten, bezogen auf den verstreckten Faden aufgebracht wird. Diese Zusammensetzung hat eine bessere Stabilität als diejenige gemäss den US-Patenten 3 383 424 und 3 297 468. Die Verbindung (I) stellt ein Amin mit mindestens einer tertiären Funktion dar. Man nimmt an, dass das tertiäre Amin katalytisch auf die Reaktion zwischen Polyepoxid und Polymer wirkt. Die Gruppe X kann auch ein primäres, sekundäres oder tertiäres Amin sein. In diesem Fall verstarkt die zweite Amin-Funktion die katalytische Aktivität. Dank der Verbindung (I) wird eine Haftschicht gebildet, die allein oder zusammen mit einer RFL-Behandlung dem in Gummi einvulkanisierten Faden gute Haftung verleiht.

Die Verbindung (I) ist vorzugsweise das N,N-Dimethylbenzylamin, 3-Diethylamino-1-propyl-amin, 3-Dimethylamino-1-propylamin, Tribenzylamin, Triethanolamin oder Triethylamin. Der Typ des Polyepoxids der erfindungsgemässen Zusammensetzung ist nicht kritisch. Man bevorzugt speziell die Glycidylether, die allgemein durch die Reaktion von Epichlorhydrin mit einem Alkohol oder einem Phenol hergestellt werden. Das Polyepoxid kann gesättigt, ungesättigt, aliphatisch, cycloaliphatisch, aromatisch, heterocyclisch oder substituiert sein. Die Verbindungen sind entweder Monomere oder Polymere mit mindestens zwei Epoxygruppen pro Molekül. Als Beispiele solcher Verbindungen können die Epoxid-Derivate des Bisphenols A oder der Phthalsäure, die Epoxyphenol-novolac oder die Epoxycresol-novolac, die Glycidylisocyanurate, die epoxidhaltigen Derivate des Hydantoins wie der Hydantoin-Triglycidylether, die aliphatischen Glydidylether wie der Butandioldiglycidylether, der Ethylenglykoldiglycidylether oder der Glycerintriglycidylether, oder noch die Glycidylderivate des Triazins wie das Tris-(epoxy-propoxy-2,3)3-propionyl-1,3,5-hexahydro-s-triazin (TEPS) genannt werden.

Das oben erwähnte TEPS wurde schon in der Zusammensetzung gemäss US-Patent 4121901, wegen seiner guten Löslichkeit in Wasser, verwendet. Die erfindungsgemässe Zusammensetzung ist in Wasser, Alkohol, Wasser-Alkoholgemisch oder in einer Fadenpräparation gelöst. Unter Fadenpräparation sind hauptsächlich Produkte gemeint, welche die Gleit-, antistatischen und Benetzeigenschaften des synthetischen Fadens verbessern.

Diese Zusammensetzung kann entweder allein oder zusammen mit Hilfsmitteln verwendet werden. Als Hilfsmittel versteht man Produkte, welche die Haftung des Fadens mit Gummi noch verbessern können, z.B. Carrier- oder Quellmittel wie Ethylenglykol, Caprolactam, Polyvinyl- oder Benzyl-Alkohol, oder Lösungsmittel, die ein besseres Diffundieren des Epoxids in das Polymer erlauben. Netzmittel oder oberflächenaktive Mittel wie die kommerziellen Produkte QZ 13 von CIBAGEIGY und TW 1196 von ZSCHIMMER & SCHWARZ, die Lösungen mit Silikonen oder ethoxylierten Verbindungen darstellen, können noch eingesetzt werden. Sekundäre Präadhärisierungsmittel können auch noch aufgetragen werden, z.B. diejenigen auf der Basis von Silanen (Epoxysilane), Polychlorophenole (Vulcabond E von VULNAX) oder diejenigen mit freien oder blockierten lsocyanatgruppen, oder Urethane, Polyimine, Polyacrylate und Polyamide. Man kann ebenfalls den erfindungsgemäss präadhärisierten Faden vor der RFL-Behandlung dem klassischen Vorbehandlungsmittel, bestehend aus einem Polyepoxid und einem blockierten Polyisocyanat, unterwerfen.

Die Menge des Polyepoxids in der erfindungsgemässen Zusammensetzung beträgt 5 bis 99 und diejenige der Verbindung (I) 0,01 bis 6,0, bevorzugt 0,05 bis 3 Gew.-%. Der Rest besteht aus Wasser, Alkohol, Wasser-Alkoholgemisch oder einer Fadenpräparation.

Der Typ des Polyepoxids und der Verbindung (I) ist der gleiche wie in der erfindungsgemässen Zusammensetzung, ebenso die Art der Lösung.

Die Menge des auf den Faden aufgetragenen Polyepoxids und besonders der Verbindung (I) ist gemäss der Erfindung ziemlich kritisch. Was das Polyepoxid betrifft, entstehen unter 0,05% die Probleme der ungenügenden Haftung und unregelmässigen Verteilung des Polyepoxids längs des Fadens, und eine Menge von mehr als 0,5% bringt keine bessere Haftung. Für die Verbindung (I) erhält man eine maximale Haftung des Fadens mit Gummi, wenn man sie in einer Menge von 2 bis 114 ppm, bevorzugt 5 bis 100 ppm, aufträgt. Alle oben erwähnten Aufträge betreffend Polyepoxid und Verbindung (l) beziehen sich auf den behandelten Polyesterfaden.

In der vorliegenden Beschreibung versteht man unter Polyester lineare, polykondensierte Ester, hergestellt durch die Reaktion eines oder mehrerer Diole der Serie HO(CH₂)ₙOH mit 1 ≤ n ≤ 10 mit einer Dicarbonsäure, vorzugsweise Terephthalsäure, oder einen entsprechenden Diester wie Dimethylterephthalat. Die Polyester können auch mit organischen oder anorganischen Zusätzen modifiziert sein. Der verwendete Polyester für die Verstärkung von Elastomeren ist orientiert und verstreckt, um Verstärkungsfilamente mit befriedigenden mechanischen Eigenschaften für ihre Verwendung zu erhalten.

Der bevorzugte Polyester ist Polyethylenterephthalat ohne Beschränkung betreffend des Gehaltes an Carboxylendgruppen oder an Diethylenglykol.

Der verstreckte Faden wird nach einem integrierten Spinnstreckprozess hergestellt. Bei diesem integrierten Spinnstreckprozess wird der Faden bei Abzugsgeschwindigkeiten von 2000 bis 6000m/min aufgespult. Die erfindungsgemässe Zusammensetzung wird zwischen dem letzten Duo und dem Spuler mit einem oder zwei Dosierstiften aufgetragen.

Weitere Behandlungen des verstreckten Fadens können auch als notwendig betrachtet werden, um das Gleiten oder die Ermüdung desselben zu verbessern, z. B. das Auftragen von Polysiloxanen, Silanen, Polyethylenglykolen, Ester- oder Mineralölen.

Das erfindungsgemässe Verfahren erlaubt, einen Polyesterfaden mit sehr guten mechanischen Eigenschaften und einem besseren Haftvermögen mit Gummi herzustellen. Dieses Verfahren ist anderseits einfach und sehr wirtschaftlich, da der Streckprozess nicht negativ beeinflusst wird. Der Titer des so hergestellten Polyesterfadens ist nicht kritisch. Er liegt vorzugsweise zwischen 500 und 2500 dtex und die Fibrillenzahl zwischen 80 und 500. Dieser Faden ist besonders geeignet für die Verstärkung vom Gummiartikeln wie Autoreifen, Förderbänder, Keilriemen, Schläuche. Er kann auch für Artikel, die mit Polyvinylchlorid beschichtet werden, eingesetzt werden.

Der so erhaltene Faden istdann bereit, um nach klassischer Art mit einem RFL-Bad vor der Vulkanisation mit Gummi behandelt werden zu können. Für bestimmte Einsätze wird er auch ohne RFL-Imprägnierung einvulkanisiert.

Der erfindungsgemäss präadhärisierte Faden kann auch einer zweiten Behandlung in einem klassischen Bad von Polyepoxid, gemischt mit einer wässrigen Dispersion eines blockierten Polyisocyanates, ausgesetzt werden, bevor er mit dem RFL imprägniert und/oder einvulkanisiert wird.

Das Polyepoxid, das vorteilhaft wasserlöslich ist, wird in einer Konzentration von 5 bis 99% in der vorgelegten Menge Wasser, Wasser-Ethanolgemisch oder Lösungsmittel wie Polyglykole, Benzylalkohol, Esteröle aufgelöst. Anschliessend wird vor Gebrauch der Zusammensetzung die Verbindung (I) in einer Konzentration von 0,01 bis 6,0, bevorzugt 0,05 bis 3,0 Gew.-%, zugegeben.

### Cordherstellung

Ein Polyesterfaden mit einem Titer von 1100 dtex, bestehend aus 192 Einzelfibrillen mit hohem Modul und hoher Festigkeit, wird nach einem Spinnstreck-Verfahren wie folgt hergestellt:

Das hochviskose Polymer wird im Extruder bei einer Temperatur von 280 bis 330°C aufgeschmolzen und durch eine Spinndüse extrudiert. Nach Abkühlung in einem Blasschacht wird der Faden mit normaler Geschwindigkeit abgezogen und über eine Präparationsrolle, wo eine Spinnpräparation aufgetragen wird, sowie über mehrere Rollenpaare, die bei verschiedenen Temperaturen und Geschwindigkeiten betrieben werden, geführt, wo er verstreckt und fixiert wird. Die Rollen können je nach den erwünschten mechanischen Fadeneigenschaften Temperaturen von 70 bis 245 °C aufweisen. Die Rollengeschwindigkeiten sind so, dass der gesponnene Faden bis auf die sechsfache Länge verstreckt werden kann. Er wird bei einer Abzugsgeschwindigkeit von 3000 m/min direkt aufgespult.

Mehrere, z.B. 2 dieser Fäden werden nach gewohnter Art zu einem sogenannten Rohcord zusammengezwirnt. Dieser wird dann mit der RFL-Lösung, bestehend aus 20% eines Resorcinol-Formaldehyd-Harzes und eines Latexes, auf einer Behandlungsmaschine imprägniert und anschliessend bei 150 °C während 30s, dann bei 235 °C während 1 min nach klassischer Art thermisch behandelt. Dieser imprägnierte Cord wird dann im Gummi einvulkanisiert.

Die Hafteigenschaften des einvulkanisierten Cords werden nach dem Strip-Test-A-300 von UNIROYAL getestet. Bei diesem Test wird die Kraft gemessen, die notwendig ist, um zwei Gummischichten von einem einvulkanisierten Cordgewebe zu trennen. Eine Kraft (Pull) von kleiner als 10 daN bedeutet schlechte Haftung, und eine Kraft grösser als 15 oder 20 daN bedeutet gute bis sehr gute Haftung mit Gummi.

Die Appearance-Note gibt an, wie gut der Gummi an der Cordschicht haften bleibt. Die höchste Note 5 kennzeichnet eine Haftung, bei welcher der Riss im Gummi erfolgt und der Cord an der Rissfläche nicht sichtbar ist. Die schlechteste Note 0 kennzeichnet eine Haftung, bei welcher der Riss an der Grenzschicht Gummi-Cord erfolgt, so dass kein Gummi an der Cordschicht hängen bleibt. Die Noten 0,5 bis 4,5 sind Zwischenzustände. Im vorliegenden Fall hat der Cord einen Pull von 7 daN und eine Appearance-Note von 0.

### Beispiele 1 bis 11

Die Fadenherstellung gemäss Erfindung erfolgt wie oben erwähnt, jedoch mit dem Unterschied, dass der Faden zwischen dem letzten Duo und dem Spuler über ein Präadhärisierungsaggregat, bestehend aus einem Dosierstift, geführt und die Zusammensetzung aufgetragen wird.

Die Zusammensetzung besteht aus einem Polyepoxid, einem tertiären Amin und einem Lösungsmittel. Die Konzentration des Polyepoxids beträgt in unseren Beispielen 35 Gew.-%, jene des erfindungsgemässen tertiären Amins ist in der Tabelle angegeben. Der Auftrag auf dem Faden beträgt gemäss den Beispielen 0,2% Epoxidharz. Der so hergestellte Faden wird mit RFL imprägniert und anschliessend einvulkanisiert.

Folgende Tabelle zeigt die Strip-Test-Resultate beim Auftragen verschiedener Zusammensetzungen.

Beispiel 1 zeigt, wie mässig die Haftung ist, wenn man nicht die erfindungsgemässe Verbindung (I) neben dem Polyepoxid einsetzt.

In den Beispielen 2 bis 4 kommt der katalytische Einfluss des erfindungsgemässen tertiären Amins zum Ausdruck. Beispiel 3 stellt eine optimale Aminkonzentration dar, bei welcher der Pull-Wert maximal ist.

In Beispiel 5 wurden statt 0,2 nur 0,05% Polyepoxid auf den Faden aufgetragen. Der Pullwert ist gesunken, bleibt aber immer noch höher als in Beispiel 1, wo der Polyepoxid-Auftrag viermal höher ist, aber keine Verbindung (I) eingesetzt wurde.

Die Beispiele 6 bis 10 sind ebenfalls Gegenstand unserer Erfindung. Wie man feststellen kann, spielt die Art des Polyepoxids (Di- oder Triepoxid mit unterschiedlichen Strukturen) eine nicht zu vernachlässigende Rolle (Beispiele 6 und 8). Das Lösungsmittel dagegen ist nicht kritisch (Beispiele 8 und 9). In den Beispielen 7, 8 und 10 wurden verschiedene Amine mit dem gleichen Epoxid eingesetzt.

In Beispiel 11 wurde ein Polymer, dem vor dem Aufschmelzen im Extruder Ethylenoxid zugesetzt wurde, eingesetzt. Der hergestellte Faden weist nur 5 mol/t Carboxylendgruppen auf. Der in Zusammensetzung und Verfahren erfindungsgemäss hergestellte Faden besitzt recht gute Hafteigenschaften. Im Vergleich zu Beispiel 8, wo der Faden 20 mol/t Carboxylendgruppen aufweist, sind die Hafteigenschaften nur unwesentlich schlechter.

Die erfindungsgemäss erhaltenen Fäden der Beispiele 2 bis 11 zeichnen sich durch gute Verarbeitungseigenschaften aus, z.B. bilden sich beim Zwirnen keine Ablagerungen. Obwohl man die einzelnen Filamente behandelt, wird die Ermüdung des hergestellten Reifencords nicht beeinträchtigt.

**Tabelle**

| Biespiel | Polyepoxid | Lösungsmittel | Verbindung (I) | Strip-Test | |
|---|---|---|---|---|---|
| | | | | Pull daN | Appearance-Note |
| 1 | TEPS (a) | H₂O | ohne | 10 | 1,0 |
| 2 | TEPS (a) | H₂O | 0,5% DPA (g) | 16,0 | 3,0 |
| 3 | TEPS (a) | H₂O | 1,0% DPA (g) | 20,5 | 3,5 |
| 4 | TEPS (a) | H₂O | 2,0% DPA (g) | 18,0 | 3,5 |
| 5 | TEPS (a) | H₂O | 1,0% DPA (g) | 16,0 | 3,0 |
| 6 | BDDG (b) | | 0,5% DMB (f) | 14,8 | 3,0 |
| 7 | GTG (c) | H₂O | 1,0% DMPA (e) | 16,3 | 3,0-3,5 |
| 8 | GTG (c) | H₂O | 0,5% DMB (f) | 18,0 | 3,5 |
| 9 | GTG (c) | H₂O/Ethanol 2 : 1 | 0,5% DMB (f) | 19,0 | 3,0-3,5 |
| 10 | GTG (c) | H₂O/Ethanol 2 : 1 | 0,8% TEA (d) | 20,0 | 3,5 |
| 11 | GTG (c) | H₂O | 0,5% DMB (f) | 15,0 | 3,0 |
| (a) TEPS = Tris-(epoxypropoxy-2,3)3-propionyl-1,3,5-hexahydro-s-triazin (b) BDDG = Butandioldiglycidylether (c) GTG = Glycerintriglycidylether (d) TEA = Triethanolamin (e) DMPA = 3-Dimethylamino-1-propylamin (f) DMB = Dimethylbenzylamin (g) DPA = 3-Diethylamino-1-propylamin | | | | | |

## Patentansprüche

1. Verfahren zur Herstellung eines Polyesterfadens für Reifenkord mittels eines integrierten Spinnstreckprozesses mit einer Abzugsgeschwindigkeit zwischen 2000 und 6000 m/min, wobei in einer ersten Stufe vor dem Verstrecken eine Spinnpräparation aufgetragen wird und in einer zweiten Stufe, zur Präadhärisierung des Polyesterfadens zur Verbesserung der Hafteigenschaften mit Gummi, nach der Verstreckung zwischen dem letzten Duo und vor dem Aufspulen eine Zusammensetzung aus 0.05 bis 0.5 Gew.-% eines Polyepoxids und 2 bis 114 ppm eines tertiären Amins folgender allgemeiner Formel 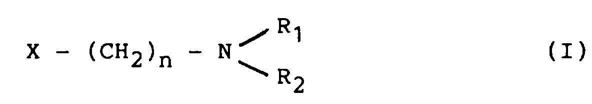 worin 1 ≤ n ≤ 6, R₁ und R₂ identisch oder verschieden, ein Alkyl mit C₁₋₆, Hydroxyalkyl mit C₁₋₅, Alkylaryl oder Aryl und X H, OH, NH₂, NHR₃, NR₄R₅ oder R₆, wobei R3, R4, R5 und R⁶ je Alkyl- mit C₁₋₆ oder Arylgruppen bedeuten, bezogen auf den verstreckten Faden, aufgebracht wird.

2. Verfahren nach Anspruch 1, dadurch gekennzeichnet, dass das tertiäre Amin (I) N,N-Dimethylbenzylamin, 3-Diethylamino-1-propylamin, 3-Dimethylamino-1-propylamin, Triethylamin, Tribenzylamin oder Triethanolamin ist.

3. Verfahren nach Anspruch 1, dadurch gekennzeichnet, dass das Polyepoxid Tris-(epoxypropoxy-2.3)3-propionyl-1,3,5-hexahydro-s-triazin, Butandioldiglycidyl-ether, Hydantoin-Triglycidylether, Ethylenglykoldi-glycidylether oder Glycerintriglycidylether ist.

4. Verfahren nach den Ansprüchen 1 bis 3, dadurch gekennzeichnet, dass die Zusammensetzung in Wasser, Alkohol, Wasser-Alkoholgemisch oder in einer Faden-präparation gelöst ist.

## Claims

1. Method for manufacturing a polyester filament, for tire cord, using an integrated spin-draw process which is produced at a take-up speed between 2000 and 6000 m/min where in a first stage prior drawing, a spin preparation is applied, and in a second stage to ameliorate the adhesive properties towards rubber, the polyester filament after drawing, is treated with a composition consisting of 0.05 to 0.5 % by weight of a polyepoxide and 2 to 114 ppm of a tertiary amine having the following general formula 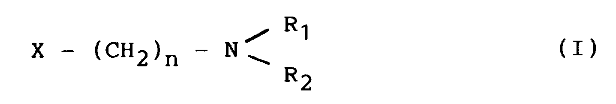 where 1 ≤ n ≤ 6, R₁ and R₂, are identical or different, are each alkyl having C₁₋₆, hydroyalkyl having C₁₋₆, alkylaryl or aryl, and X is H, OH, NH₂, NHR₃, NR₄R₅, or R₆, where R₃, R₄, R₅ and R₆ are each alkyl having C₁₋₆ or aryl groups, related on the drawn filament.

2. Method according to claim 1, wherein the tertiary amine (I) is N,N-dimethylbenzylamine, 3-diethylamino-1-propylamine, 3-dimethylamino-1-propylamine, triethylamine, tribenzylamine or triethanolamine.

3. Method according to claim 1, wherein the polyepoxide is tris(2,3-epoxypropoxy)-3-propionyl-1,3,5-hexahydro-s-triazine, butanediol diglycidyl ether, hydantoin triglycidyl ether, ethylene glycol diglycidyl ether or glycerol triglycidyl ether.

4. Method according to claims 1 to 3, wherein the composition is in solution in water, alcohol, a water-alcohol mixture or a fibre finish.

## Revendications

1. Procédé pour la fabrication d'un fil polyester pour câblé de pneu qui après un procédé de filage-étirage intégré ont été fabriqués avec une vitesse d'enroulement entre 2000 et 6000 m/min, pour l'amélioration des propriétés d'ahésion avec le caoutchouc, caractérisé en ce que sur le fil polyester soit déposé après étirage, un mélange composé de 0.05 à 0.5 % en masse rapporté au fil étiré d'un polyépoxide et de 2 à 114 ppm d'une amine tertiaire dont la formule générale est la suivant: 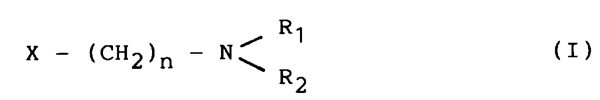 où 1 ≤ n ≤ 6, R₁ et R₂, peuvent être identiques ou différents, un alkyl avec C₁₋₆, un hydroxyalkyl avec C₁₋₆, un alkylaryl ou un aryl et X est égal H, OH, NH₂, NHR₃, NR₄R₅, ou R₆, où R₃, R₄, R₅ et R₆ représentent chacun un alkyl avec Cᵢ₋₆, ou des groupes aryl.

2. Procédé selon la revendication 1, caractérisé en ce que l'amine tertiaire (I) est la N,N-diméthylbenzylamine, la 3-diéthylamino-1-propylamine, la 3-diméthylamino-1-propylamine, la triéthylamine, la tribenzylamine ou la triéthanolamine.

3. Procédé selon la revendication 1, caractérisé en ce que le polyépoxide est le tris-(époxypropoxy-2,3)-3-propionyl-1,3,5-hexahydro-s-triazine, le butanedioldiglycidyléther, le hydantointriglycidyléther, l'éthylèneglycoldiglycidyléther ou le glycérinetriglycidyléther.

4. Procédé selon les revendications 1 à 3, caractérisé en ce que le mélange soit dissout dans l'eau, dans un alcool, dans un mélange eau-alcool ou dans une préparation de filage.
